# FASCICULE DE BREVET EUROPEEN

(11) **EP 1 264 239 B1**
(45) Date de publication et mention de la délivrance du brevet: **15.11.2006**
(21) Numéro de dépôt: 01917155.2
(22) Date de dépôt: 15.03.2001
(51) Int. Cl.: G06F 13/00, H04L 12/28, H04M 11/06

(54) **COMPOSANT ELECTRONIQUE MONOLITHIQUE INTEGRE POUR LA CONNEXION SUR UN RESEAU INTERNET**
INTEGRIERTES MONOLITHISCHES ELEKTRONISCHES BAUELEMENT ZUM ZUGANG MIT EINEM INTERNET-NETZWERK
INTEGRATED MONOLITHIC ELECTRONIC COMPONENT FOR CONNECTION ON AN INTERNET NETWORK

(30) Priorité: 15.03.2000 FR 0003322
(43) Date de publication de la demande: 11.12.2002
(73) Titulaire: E-Device S.A., 33700 Merignac (FR)
(72) Inventeur: SCHINAZI, Stéphane, F-33700 Merignac (FR)
(74) Mandataire: Breese, Pierre
(86) Numéro de dépôt international: PCT/FR2001/000781
(87) Numéro de publication internationale: WO 2001/069393

(56) Documents cités:
- WO-A-98/37665
- WO-A-98/47252
- WO-A-99/52237
- US-A- 5 867 495

## Description

La présente invention concerne le domaine des télécommunications et plus particulièrement des systèmes permettant de doter un équipement d'une fonction d'accès au réseau Internet.

On connaît dans l'état de la technique l'utilisation de microprocesseurs ou d'ASIC connectés à des mémoires vives dans lesquelles sont chargés les logiciels de protocole de réseau utilisés par l'Internet, associés à des systèmes permettant de réaliser l'interface physique à un réseau de télécommunications, tels qu'un modem filaire, un modem radio, ou encore une carte Ethernet.

Il s'agit de composants dont le prix de revient est élevé, et qui ne permettent pas la réalisation d'une fonction d'accès au réseau Internet à faible prix.

On connaît également des terminaux de communication comportant des processeurs de la famille des DSP (Digital Signal Processor) destinés au traitement numérique d'un signal de télécommunication, dans lequel est chargé un programme applicatif modem, pour assurer l'interface entre les signaux numériques et les signaux digitaux. Ces composants sont généralement réalisés en technologie CMOS, et incorporent des mémoires internes dont la taille est connue par l'homme du métier comme étant insuffisante pour le chargement d'autres programmes. Dans ce cas, il est nécessaire d'ajouter des composants additionnels pour le traitement des protocoles Internet.

On connaît aussi le brevet WO98/37665 qui concerne une boîte de commutation Internet servant de connexion entre un appareil téléphonique et une ligne de réseau téléphonique commuté public (RTCP), cette dernière étant utilisée à la fois pour les conversations téléphoniques sur le RTCP et pour servir de connexion avec un fournisseur d'accès Internet (ISP). La boîte de commutation contient un matériel et un logiciel incorporé, permettant d'établir une connexion avec un ISP et un dispositif de téléphonie par Internet. Lorsque deux utilisateurs, chacun possédant une boîte de commutation Internet connectée à l'appareil téléphonique, veulent avoir une conversation téléphonique par Internet, l'un des utilisateurs appelle l'autre via le RTCP. Lorsqu'ils conviennent d'une conversation téléphonique par Internet, ils envoient un signal à leur boîte de commutation Internet soit en pressant sur des boutons se trouvant sur la boîte de commutation, soit en tapant sur les touches du clavier du téléphone, pour obtenir une commutation au système de téléphonie par Internet. Les boîtes de commutation déconnectent l'appel RTCP et se connectent à leur ISP. Une fois que les boîtes de commutation sont connectées a Internet, elles se mettent en contact l'une avec l'autre via un serveur qui fournit les adresses de protocole Internet (IP) des boîtes de commutation, et les utilisateurs peuvent continuer leur conversation par le dispositif de téléphonie par Internet.

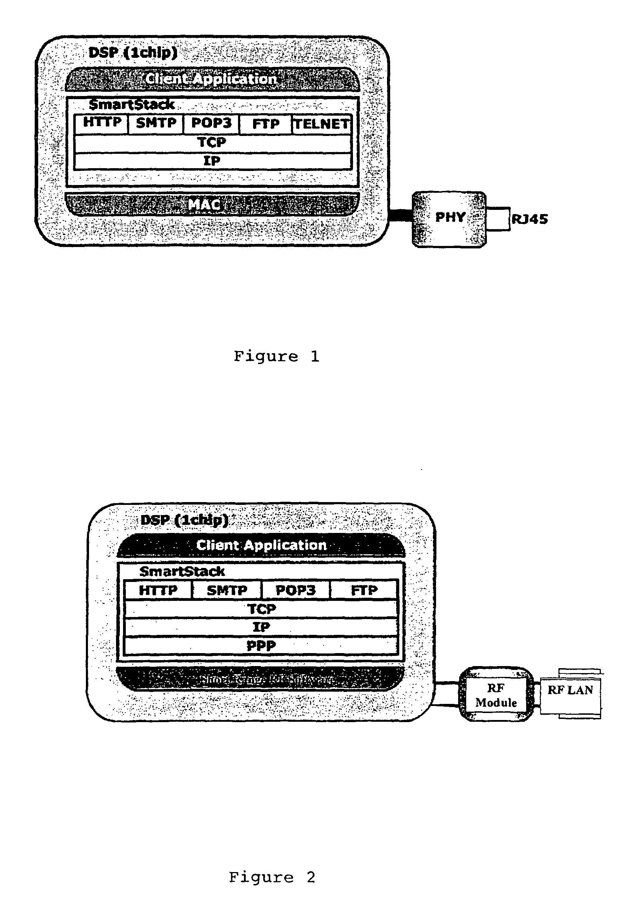

Dans cette réalisation proposée par le brevet WO98/37665, il est évoqué d'utiliser un DSP, pour réaliser les fonctions de codage-décodage seulement. Il présente différents exemples illustrés par les figures 2A et 2B où il apparaît que le DSP référencé 201 ou 2B03 n'exécute que des fonctions de type CODEC, les fonctions correspondant aux couches physique du protocole étant exécutées par des moyens extérieurs au DSP.

Ce document concerne, rappelons le, un boîtier de commutation Internet destiné à exploiter de la « voix sur IP ». Une telle application ne prévoit pas de couches applicatives du type http, ou FTP, ou de serveur WEB, ni les routines de messagerie.

Un autre brevet de l'art antérieur, le brevet WO99/52237, décrit une système de transmission et de réception de la voix et des données dans des modes multiples, tel qu'un PABX, serveur de fichiers, serveur WEB, routeur de données.

Ce système met en oeuvre un DSP référencé 76 qui a pour seule fonction de générer des séquences DTMF ainsi qu'un autre DSP 79 distinct du premier DSP 76 permettant le traitement de ressources additionnelles.

Les couches applicatives traitées dans ce système de l'art antérieur ne sont pas mentionnées dans ce document et ne sont pas traitées par les DSP 76 ou 79 décrits.

L'invention a pour but de proposer un composant monolithique unique qui permet de réaliser l'ensemble des fonctions d'accès au réseau Internet y compris les couches applicatives et les couches physiques.

L'invention concerne dans son acception la plus générale un composant électronique monolithique intégré conforme à la revendication 1. Ce composant réalise l'intégration conjointe d'une pile de protocoles Internet et d'un programme de traitement du signal permettant la transmission des données sur un support physique (par exemple le réseau téléphonique commuté) dans un unique processeur DSP (Digital Signal Processor). L'implémentation de la pile de protocoles Internet dans un DSP et l'intégration de cette pile avec un programme de traitement du signal destiné à assurer la transmission de données (émission et réception) sur un support physique donné (le réseau téléphonique commuté par exemple, ou encore d'autres supports physiques tels que les réseaux Ethernet, les courants porteurs, et les liaisons radio courte portée.) constituent des caractéristiques techniques nouvelles, et inhabituelles pour l'homme du métier. En effet, ce type de processeur est traditionnellement utilisé seulement pour l'exécution de programmes de traitement de signal.

Il s'agit d'intégrer simultanément dans un même DSP une pile de protocoles Internet et un programme de traitement du signal permettant la transmission de données sur l'un des supports physiques mentionnés ci-dessus.

Cette intégration conjointe permet de réaliser une connexion à l'Internet au moyen de l'un de ces supports grâce à un seul DSP (plus le ou les composants réalisant l'interface matérielle avec le support de transmission considéré, par exemple un composant de conversion analogique/digital pour réaliser l'interface avec une ligne téléphonique.

Selon une variante particulière, il comporte au moins une mémoire de moins de 8 kilo-mots dans laquelle est enregistré un programme implémentant les protocoles Internet, et comprenant des routines pour les fonctionnalités de messagerie, de téléchargement FTP et/ou de serveur WEB.

Selon un mode de réalisation préféré, le composant selon l'invention comporte un seul buffer dans chacun des sens de transmission pour la préparation des données selon les normes PPP, IP et TCP, et une mémoire tampon pour les calculs intermédiaires.

L'invention concerne également un équipement de communication selon la revendication 9.

L'invention concerne aussi un procédé pour le traitement des données numériques par un processeur DSP en vue de la transmission sur le réseau Internet, caractérisé en ce que l'on calcule l'en-tête TCP, l'en-tête IP et l'en-tête PPP en mémorisant les données intermédiaires dans une seule mémoire de travail et une seule mémoire intermédiaire de calcul.

La présente invention sera mieux comprise à la lecture de la description d'un exemple non limitatif de réalisation qui suit, ce référant aux dessins annexés où
la figure 1 représente une vue schématique d'un premier exemple de réalisation ;
la figure 2 représente une vue schématique d'un deuxième exemple de réalisation.

Le composant représenté en figure 1 est un composant DSP comprenant des fonctions de traitement du signal destiné à assurer la transmission de données dans lequel on charge en outre un programme pour l'exécution des protocoles Internet réduits.

Il s'agit d'un composant comprenant un processeur intégré pour traiter le signal numérique et pour produire des données intermédiaires et un groupement de RAM (mémoires vives) partagées pour mémoriser des données numériques intermédiaires.

Le programme de traitement du signal commande la connexion au réseau physique reliant l'équipement au point d'accès Internet. Le programme pour l'exécution des protocoles Internet traite à la fois les couches basses (PPP, IP, TCP) et les couches hautes (HTTP, SMTP, POP, FTP) de l'ensemble des protocoles Internet.

Le programme chargé dans le DSP contient donc plusieurs protocoles parmi les suivants :
PPP,
IP,
TCP,
une partie de HTTP, pour le contrôle d'un serveur web simple,
SMTP pour l'envoi des e-mail,
POP3 pour la réception de messages,
FTP pour le téléchargement de fichiers,
Telnet.

Afin de permettre l'exécution de ces programmes dans les mémoires de faibles capacités du DSP, les données sont traitées selon un algorithme particulier évitant l'utilisation d'une pluralité de mémoires de travail.

Un équipement connectable à l'Internet par une ligne téléphonique comprend des moyens de mise en oeuvre des protocoles Internet, des moyens de traitement du signal pour la transmission effective des signaux physiques sur le réseau téléphonique commuté (modem), ainsi qu'une interface matérielle avec la ligne téléphonique.

Dans une variante d'implémentation, dont la figure 2 représente une vue schématique, l'accès à l'Internet ne se fait pas directement au moyen du réseau téléphonique commuté, mais à travers un réseau local (utilisant par exemple Ethernet, la transmission par courants porteurs, ou encore une liaison locale radio) et une passerelle de connexion entre ce réseau local et le réseau téléphonique commuté.

Une variante de l'architecture consiste donc à implanter des modules logiciels permettant la transmission sur d'autres supports physiques (tels que l'Ethernet ou les courants porteurs), et non plus seulement sur ligne téléphonique, dans le même type de processeur (DSP). Cette variante permet de disposer de modules logiciels interchangeables dans le DSP (ou en général dans un processeur quelconque, permettant de réaliser une connectivité à l'Internet au moyen de supports physiques divers (et non plus seulement par une ligne téléphonique) tout en présentant une interface unique avec l'équipement associé.

Dans une deuxième variante, la connexion à l'Internet (directe ou au travers d'un réseau local) par le réseau téléphonique commuté est remplacée par une connexion à haut débit (utilisant par exemple l'ADSL ou le câble). Là encore, l'accès peut s'effectuer soit directement, soit au travers d'un réseau local.

### Implémentation des protocoles Internet :

Les détails d'implémentation permettant l'intégration de la pile de protocoles Internet dans un DSP sont les suivants :
- exécution de la pile de protocoles depuis une mémoire interne du DSP,
- utilisation d'un buffer unique dans chaque sens de transmission,
- mise en oeuvre de fonctionnalités de messagerie, de téléchargement FTP et de Web server,
- utilisation d'une seule mémoire de travail pour la génération des en-têtes des différents protocoles.

### Programme de traitement des signaux de transmission :

Le dispositif réalise l'exécution d'un programme modem par le DSP pour assurer la transmission physique des signaux sur une ligne téléphonique, ou dans le cas de la transmission sur d'autres supports physiques, l'exécution par le DSP :
- d'un programme assurant les fonctions Ethernet de bas niveau (habituellement effectuées par un composant MAC [= Medium Access Control]), dans le cas de l'utilisation d'un réseau Ethernet,
- d'un programme de modulation/démodulation par courants porteurs, dans le cas de l'utilisation des courants porteurs,
- d'un programme de traitement des données en bande de base, dans le cas de l'utilisation d'une liaison radio courte portée.

### Interface matérielle avec le support physique :

Dans le cas d'une transmission sur le réseau téléphonique commuté, on utilise un composant de conversion analogique/digital pour réaliser l'interface matérielle avec une ligne téléphonique. Dans le cas d'autres supports, on utilise :
- un composant d'interface réseau Ethernet (composant PHY [= physique] ), dans le cas de l'utilisation d'un réseau Ethernet,
- un circuit d'interface de ligne électrique, dans le cas de l'utilisation des courants porteurs,
- un circuit transceiver radio courte portée, dans le cas de l'utilisation d'une liaison radio courte portée.

### Fonction de passerelle :

Certaines des couches physiques de transmission mentionnées ci-dessus peuvent être groupées par deux et implantées simultanément dans le même DSP, de façon à réaliser sur un processeur unique une fonction de passerelle. Les couples envisageables sont :
- RTC (réseau téléphonique commuté) / Ethernet,
- RTC / CP (courants porteurs),
- RTC / RCP (radio courte portée).

En plus des protocoles d'accès à l'Internet décrits dans ce qui précède, l'équipement incluant la fonction de passerelle comporte une implémentation d'au moins l'un des protocoles suivants :
- NAT (Network Address Translation), de façon à implanter une fonction de conversion d'adresses IP entre les différentes adresses des équipements du réseau interne et l'adresse IP unique de ce réseau vu depuis Internet (fonction de routeur),
- DHCP (Dynamic Host Configuration Protocol, en serveur), qui permet d'assigner de façon dynamique une adresse IP à chaque équipement du réseau interne.

### Couche de supervision :

L'invention décrite dans ce qui précède porte sur l'intégration conjointe d'une pile de protocoles Internet et d'un programme modem (ou plus généralement d'un programme de traitement du signal permettant la transmission de données sur un support physique, ainsi que décrit ci-dessus) dans un unique processeur DSP. Il est également possible d'intégrer, dans le même DSP et au-dessus de la pile de protocoles, un troisième logiciel, appelé couche de supervision, permettant :
- d'une part, de convertir des informations échangées par le DSP avec l'équipement dans lequel il est intégré, en informations contenues à l'intérieur de messages échangés avec un système distant au travers de l'Internet, et cela dans les deux sens de transmission (émission et réception),
- d'autre part, de générer des appels sortants de façon automatique vers le fournisseur d'accès Internet, dans le but par exemple d'envoyer un message électronique ou de vérifier la réception éventuelle d'un message électronique.

Cette génération d'appels peut par exemple provenir d'un événement local (changement d'état d'une entrée du DSP, alarme, ...) ou encore être programmée pour survenir à une date et/ou à une heure prédéterminées.

En outre, la couche de supervision peut se charger de garantir qu'une information a bien été envoyée vers un système distant, en utilisant des messages d'acquittement, et en générant des rappels vers le fournisseur d'accès Internet, si nécessaire.

## Revendications

1. Composant électronique pour la connexion sur un réseau de télécommunications et l'échange de données conformément à une partie au moins des fonctionnalités internet, ledit composant électronique comprenant un DSP, Digital Signal Processor, ledit DSP comprenant des premiers moyens de traitement de signal aptes à réaliser un échange de données sur ledit réseau **caractérisé en ce que** ledit DSP comprend en outre des deuxièmes moyens aptes à mettre en oeuvre au moins une fonction internet, ladite au moins une fonction internet étant choisie parmi des fonctions de messagerie, de téléchargement FTP et/ou de serveur web.

2. Composant électronique selon la revendication 1 dans lequel lesdits premiers moyens de traitement de signal comprennent des moyens aptes à réaliser une modulation/démodulation par courant porteur.

3. Composant électronique selon la revendication 1 dans lequel ledit réseau est un réseau local radio, et dans lequel lesdits premiers moyens de traitement de signal comprennent des moyens aptes à réaliser un échange de données sur un réseau local radio.

4. Composant électronique selon la revendication 1, dans lequel ledit réseau est un réseau téléphonique commuté, et dans lequel lesdits premiers moyens de traitement de signal comprennent des moyens aptes à réaliser un échange de données sur ledit réseau téléphonique commuté.

5. Composant électronique selon l'une quelconque des revendications précédentes dans lequel ledit composant électronique comprend au moins une mémoire de moins de huit kilo-mots, et dans lequel lesdits deuxièmes moyens sont stockés dans ladite mémoire.

6. Composant électronique selon l'une des revendications précédentes dans lequel ledit composant électronique est adapté pour être intégré dans un équipement de communication, ledit composant électronique et ledit équipement de communication échangeant des données locales, pour l'échange de messages entre ledit équipement de communication et un système distant à travers un fournisseur d'accès internet, et dans lequel ledit DSP comprend des troisièmes moyens de supervision, lesdits troisièmes moyens de supervision étant aptes à convertir lesdites données locales en informations contenues à l'intérieur desdits messages dans une directions de réception et une direction d'émission, lesdits troisièmes moyens de supervision étant en outre apte à générer automatiquement des appels sortant vers ledit fournisseur d'accès internet.

7. Composant électronique selon la revendication 6 dans lequel lesdits troisièmes moyens de supervision sont en outre aptes à réaliser une confirmation du fait qu'un desdits messages a été envoyé vers ledit système distant.

8. Composant électronique selon l'une des revendications précédentes dans lequel lesdits deuxièmes moyens sont apte à mettre en oeuvre au moins un des protocoles choisi parmi le protocole NAT et le protocole DHCP.

9. Equipement de communication comportant un calculateur, des moyens de raccordement à un réseau téléphonique, et des moyens de saisie et de visualisation, **caractérisé en ce que** lesdits moyens de raccordement audit réseau téléphonique sont constitués par un composant électronique selon la revendication 1.

## Claims

1. Electronic component for connecting to a telecommunications network and exchanging data in accordance with at least some internet functionalities, said electronic component comprising a DSP (Digital Signal Processor), said DSP comprising a first set of signal processing means that are capable of exchanging data over said network, **characterised in that** said DSP also comprises a second set of means that are capable of implementing at least one internet function, said at least one internet function being selected from among the messaging, FTP download and/or web server functions.

2. Electronic component according to claim 1, in which said first set of signal processing means comprise means that can provide modulation/demodulation by carrier current.

3. Electronic component according to claim 1, in which said network is a wireless local area network, and in which said first set of signal processing means comprise means that are capable of exchanging data over a wireless local area network.

4. Electronic component according to claim 1, in which said network is a public switched telephone network, and in which said first set of signal processing means comprise means that are capable of exchanging data over said public switched telephone network.

5. Electronic component according to any one of the preceding claims, in which said electronic component comprises at least one memory with less than eight kilowords, and in which said second set of means are stored in said memory.

6. Electronic component according to one of the preceding claims, in which said electronic component is adapted so as to be integrated in a piece of communication equipment, said electronic component and said communication equipment exchanging local data, such as to exchange messages between said communication equipment and a remote system by means of an internet service provider, and in which said DSP comprises a third set of supervision means, said third set of supervision means being capable of converting said local data into information contained in said messages in a source address and a target address, said third set of supervision means also being capable of automatically generating outgoing calls to said internet service provider.

7. Electronic component according to claim 6, in which said third set of supervision means are also capable of confirming that one of said messages was sent to the remote system.

8. Electronic component according to one of the preceding claims, in which said second set of means are capable of implementing at least one of the protocols selected from the NAT protocol and the DHCP protocol.

9. Communication equipment comprising a calculator, means for connecting to a telephone network and means for entering and viewing data, **characterised in that** said means for connecting to said telephone network consist of an electronic component according to claim 1.

## Patentansprüche

1. Elektronische Komponente für den Anschluß an ein Telekommunikationsnetz und den Datenaustausch in Übereinstimmung mit mindestens einem Teil der Internet-Funktionen, wobei die besagte elektronische Komponente einen DSP (Digital Signal Processor) umfaßt, wobei der besagte DSP erste Mittel für die Signalverarbeitung umfaßt, die fähig sind, einen Datenaustausch auf dem besagten Netz durchzuführen, **dadurch gekennzeichnet, daß** der besagte DSP ferner zweite Mittel umfaßt, die fähig sind, mindestens eine Internet-Funktion einzusetzen, wobei die besagte mindestens eine Internet-Funktion unter den Funktionen Mailbox, FTP Fernladung und/oder Web-Server gewählt wird.

2. Elektronische Komponente nach Anspruch 1, in der die besagten ersten Mittel für die Signalverarbeitung Mittel umfassen, die fähig sind, eine Modulation /Demodulation durch Trägerstrom durchzuführen.

3. Elektronische Komponente nach Anspruch 1, in der das besagte Netz ein lokales Funknetz ist, und in dem die besagten ersten Mittel für die Signalverarbeitung Mittel umfassen, die fähig sind, einen Datenaustausch auf einem lokalen Funknetz durchzuführen.

4. Elektronische Komponente nach Anspruch 1, in der das besagte Netz ein geschaltetes Telefonnetz ist, und in der die besagten ersten Mittel für die Signalverarbeitung Mittel umfassen, die fähig sind, einen Datenaustausch auf besagtem geschalteten Telefonnetz durchzuführen.

5. Elektronische Komponente nach einem beliebigen der vorstehenden Ansprüche, in der die besagte elektronische Komponente mindestens einen Speicher mit weniger als acht Kilo-Worten umfaßt, und in der die besagten zweiten Mittel in besagtem Speicher abgelegt sind.

6. Elektronische Komponente nach einem beliebigen der vorstehenden Ansprüche, in der die besagte elektronische Komponente so angepaßt ist, daß sie in eine Kommunikationsausrüstung eingebaut werden kann, wobei die besagte elektronische Komponente und die besagte Kommunikationsausrüstung lokale Daten austauschen für den Austausch von Meldungen zwischen der besagten Kommunikationsausrüstung und einem entfernten System durch einen Internet-Provider, und in der der besagte DSP dritte Mittel zur Überwachung umfaßt, wobei diese dritten Mittel zur Überwachung geeignet sind, die besagten lokalen Daten in Informationen umzuwandeln, die in den besagten Meldungen enthalten sind in einer Empfangsrichtung und einer Senderichtung, wobei diese dritten Mittel zur Überwachung außerdem fähig sind, automatisch ausgehenden Anrufe zum besagten Internet-Provider zu generieren.

7. Elektronische Komponente nach Anspruch 6, in der die besagten dritten Mittel zur Überwachung außerdem fähig sind, eine Bestätigung der Tatsache durchzuführen, daß eine der besagten Meldungen an das besagte entfernte System geschickt worden ist.

8. Elektronische Komponente nach einem beliebigen der vorstehenden Ansprüche, in der die besagten zweiten Mittel fähig sind, mindestens eines der Protokolle einzusetzen, das zwischen dem NAT Protokoll und dem DHCP Protokoll gewählt wurde.

9. Kommunikationsausrüstung mit einem Rechner, Mittel zum Anschluß an ein Telefonnetz und Mittel zur Erfassung und Anzeige, **dadurch gekennzeichnet, daß** die besagten Mittel zum Anschluß an das besagte Telefonnetz von einer elektronischen Komponente nach Anspruch 1 gebildet werden.
